(19) Europäisches Patentamt
European Patent Office
Office européen des brevets

(11) EP 0 737 730 A2

(12) EUROPÄISCHE PATENTANMELDUNG

(43) Veröffentlichungstag:
16.10.1996 Patentblatt 1996/42

(51) Int. Cl.⁶: **C09D 133/04**, C09D 163/00,
C09J 7/02
// (C09D133/04, 163:02)

(21) Anmeldenummer: 96104457.5

(22) Anmeldetag: 21.03.1996

(84) Benannte Vertragsstaaten:
DE ES FR GB IT

(30) Priorität: 13.04.1995 DE 19513979
14.03.1996 DE 19609937

(71) Anmelder: Beiersdorf Aktiengesellschaft
D-20245 Hamburg (DE)

(72) Erfinder:
• Zimmermann, Dieter
21635 Jork (DE)
• Lühmann, Bernd, Dr.
22846 Norderstedt (DE)
• Schulze, Walter
22083 Hamburg (DE)
• Schliephacke, Ralf
25524 Itzehoe (DE)

(54) **Dekorative Rückseitenbeschichtung für Klebebänder**

(57) Verwendung einer wäßrigen Dispersion bzw. Emulsion aus

a) Acrylat-Copolymere und Polyethylenimin die im trockenen Zustand mit Epoxid harzen reagieren,
b) einem reaktiven Epoxidharz,
c) einem Pigment, neben
d) weiteren üblichen Hilfsstoffen bzw. Emulgatoren als reaktiver 2-Komponentenlack bzw. Druckfarbe für die dekorative Rückseitenbeschichtung eines Klebebandes mit einer oberflächenvorbehandelten Polyolefin-Trägerfolie.

EP 0 737 730 A2

**Beschreibung**

Die Erfindung betrifft die Verwendung einer speziellen wäßrigen Dispersion bzw. Emulsion für die dekorative Rückseitenbeschichtung von Klebebändern, insbesondere von Selbstklebebändern.

Das erforderliche gute Lackieren und Bedrucken von vorbehandelten Polyolefin-Folien (Corona-, Flamm-, Plasma-, Fluorvorbehandlung etc.) in Verbindung mit der Herstellung von Selbstklebebändern mit wäßrigen Farben ist nicht gelöst, trotz beträchtlicher Anstrengungen über viele Jahre.

Um das Anforderungsprofil (u.a. lösungsmittelfreie Produktionund gute Verankerung) von dekorativen (d.h. lackierten und bedruckten) Klebebändern zu erreichen, versagen lösungsmittelhaltige sogenannte „Benzinfarben" aufgrund einer zu geringen Kohäsion, (d.h. die Farbe befindet sich nach dem Wickeln zur Rolle beim Wiederabziehen auch auf der Klebemasse, sie „spult um"), während aus den sogenannten „Alkoholfarben" Substanzen bei Temperaturlagerung (40°C) vom Träger in die Klebmasse diffundieren und vor allen Dingen einen optisch negativen Eindruck hinterlassen. Reine wärmehärtbare wäßrige Acrylat-dispersionen mit Härter (z.B. Epoxid) (Kirk-Othmer: „Encyclopädia of Chemical Technology , 4. Ausgabe Vol. 1, S. 336, auch Dervent Info 91-347-373/48), erfüllen nicht das Anforderungsprofil.

Somit war es Aufgabe der Erfindung, eine Farbe zu entwickeln, die das gewünschte Anforderungsprofil eines dekorativen Klebebandes erfüllt, d.h.: wäßrig (lösungsmittelfrei), gute Adhäsion auf vorbehandelten Polyolefin-Folien, gute Kohäsion und keine Migration von negativ beeinflussenden Bestandteilen in die Klebemasse.

Überraschenderweise gelang die Problemlösung mit einem wäßrigen Klebstoffsystem, dem wäßrige Pigmentverreibungen und Hilfsmittel zugesetzt wurden, wie dies in den Patentansprüchen näher gekennzeichnet ist.

Damit lassen sich Batchansätze herstellen, die über einen Tag hinaus verarbeitet werden können und hervorragende Ergebnisse ergeben, insbesondere das Anforderungsprofil vollumfänglich erfüllen, wie dies vorstehend angegeben ist.

Die eingesetzten Acrylat-Copolymere sind insbesondere eine modifizierte Acrylat-Copolymer-Emulsion, die im trockenen Zustand mit Epoxidharzen reagiert (ohne Wärme) und im Klebstoffbereich eingesetzt wird. Geeignet sind insbesondere modifizierte Butyl-, Methyl- und Methylmetacrylate.

Geeignete Epoxidharze sind insbesondere Bisphenol A-Emulsionen.

Geeignete Pigmente sind insbesondere solche, die als fein verteilte Verreibung vorliegen, wie Allzweck-, Fluoreszenzfarb- und Nachleuchtende-Pigmente. Als Hilfsstoffe und Emulgatoren können übliche derartige Stoffe eingesetzt werden, wie Entschäumer, Verlaufs-, Benetzungsmittel und Verdicker zur Einstellung der Viskosität.

Die Dispersionen bzw. Emulsionen haben vorteilhaft Feststoffgehalte von 30 bis 70, insbesondere von 40 bis 60 Gew.-%, wobei die Viskosität insbesondere von 50 bis 300, insbesondere von 100 bis 200 m Pa.s beträgt.

Als besonders geeignet hat sich eine Mischung aus folgenden Komponenten herausgestellt:

a) Anionisches, modifiziertes Acrylat-Copolymer Dispersion:
46% - Feststoff
10,5 - pH - Wert
50 m Pa.s - Viskosität
-2°C - Tg
1,04 kg/l - Dichte

b) Polyethylenimin (Epomin SP-012)
99 % Feststoff
ca. 6 Pa • s-Viskosität
11,2 pH-Wert

c) Epoxidharz-Emulsion:
54 - 58% Feststoff
500-1000 m Pa.s-Viskosität
480 - 520 g/Eq - Epoxid - Äquivalentgewicht
1,09 g/ml - Dichte
max. 1 mm - Teilchengröße

d) Pigmentverreibungs-Emulsion:
42 - 45 Pigment
3% Glyzerin
Rest = Wasser

Im folgenden wird die Erfindung anhand eines Ausführungsbeispiels näher erläutert, ohne diese damit unnötig einschränken zu wollen.

Rezeptur (Gew.-%):

| 66,0% Neotac A 570 (Fa. Zeneca) | | Part A |
|---|---|---|
| bestehend aus: | NeoTac A-579 | 63,6 ZENECA Resins |
| | NeoCryl A-1044 | 27,2 ZENECA Resins |
| | Epomin SP-012 (50%) | 9,2 Aceto Chemicals |
| | | 100,0 |
| 7,0% Beckopox VEP.2385 (Firma Hoechst) | | |
| 27,0% Sinloihi SW25 (Worlée-Chemie) | | |

und weitere Hilfsmittel (Entschäumer- und Benetzungsmittel):

z.B.     Worlée 11800/1 (max. 2,0%)
         Worlée 11801/3 (max. 0,8%)

Die Rohstoffe sind im Handel erhältlich.
Die Herstellung erfolgt in obiger Reihenfolge mit einem Rührwerk in einem Mischer.

| Viskosität | 240 m Pa.s |
|---|---|
| Feststoff | ca. 46% |
| Topfzeit | mindestens 24h |

Neotac A 570 und Sinloihi SW zusammen sind sehr lange haltbar und können jederzeit vor Gebrauch mit dem Härter (Beckopox 2385) vermischt werden.

Für die Herstellung eines dekorativen Klebebandes wird diese Mischung z.B. auf eine weiße coronavorbehandelte 100 $\mu$m dicke PE/PP/EVA (Firma Renolit) Folie im Drahtrakelverfahren aufgetragen (ca. 20 g/m$^2$ trocken). Im anschließenden Trockenkanal getrocknet und dann 14 Tage stehen gelassen. In einem separaten Arbeitsgang erfolgt dann die Beschichtung mit einem Release-Lack, die Rückseite erhält einen Primer, und darauf kommt dann eine Acrylat-Dispersion als Klebmasse und das Selbstklebeband ist fertig.

Für das Bedrucken mit Motiven z.B. Metermaß muß lediglich der Pigmentverreibungsanteil in der Rezeptur erhöht werden.

Die nachfolgenden Klebebandprüfungen nach Designvorgabe wurden optimal bestanden.

**Patentansprüche**

1. Verwendung einer wäßrigen Dispersion bzw. Emulsion aus

   a) Acrylat-Copolymeren und Polyethyleniminen, die im trockenen Zustand bei Raumtemperatur mit Epoxidharzen reagieren,
   b) einem reaktiven Epoxidharz,
   c) einem Pigment, neben
   d) weiteren üblichen Hilfsstoffen bzw. Emulgatoren als reaktiver 2-Komponentenlack bzw. Druckfarbe für die dekorative Rückseitenbeschichtung eines Klebebandes mit einer oberflächenvorbehandelten Polyolefin-Trägerfolie.

2. Verwendung nach Anspruch 1, dadurch gekennzeichnet, daß als Oberflächenvorbehandelte Polyolefin-Trägerfolie eine solche eingesetzt wird, die haftver mittelnd vorbehandelt ist, wie mit Corona-, Flamm-, Plasma- oder Fluor-Vorbe handlung.

3. Verwendung nach Anspruch 1, dadurch gekennzeichnet, daß als Acrylat-Copolymere anionisch modifizierte Acrylat-Copolymer und Polyethylenimin eingesetzt werden.

4. Verwendung nach Anspruch 1, dadurch gekennzeichnet, daß als Epoxidharz eine Emulsion mit einer maximalen Teilchengröße von 10 bis 1000 μm, insbesondere < 1000 μm eingesetzt wird.

5. Verwendung nach Anspruch 1, dadurch gekennzeichnet, daß das Pigment als feine Verreibung eingesetzt wird.

6. Verwendung nach Anspruch 1, dadurch gekennzeichnet, daß als Hilfsstoffe Entschäumer, Benetzungsmittel und dergleichen eingesetzt werden.

7. Verwendung nach Anspruch 1, dadurch gekennzeichnet, daß von 10 bis 40, insbesondere von 20 bis 30 Gew.-% Acrylat-Copolymer, von 5 bis 10 Polyethylenimin, von 2 bis 10, insbesondere von 4 bis 6 Gew.-% Epoxidharz, und von 10 bis 40, insbesondere von 20 bis 30 Gew.-% Pigment eingesetzt wer den.

8. Verfahren zum dekorativen Rückseitenbeschichten eines Klebebandes mit einer Polyolefin-Trägerfolie, dadurch gekennzeichnet, daß auf die Trägerfolie eine wäßrige Dispersion bzw. Emulsion nach einem der Ansprüche 1-7 aufge tragen wird, welche beim Raumtemperatur vernetzt und auf diese getrocknete Schicht dann ein Release-Lack aufgetragen wird, während auf die gegen überliegende Seite der Trägerfolie zunächst ein Primer und auf diesen eine Haftmasse aufgetragen wird.

9. Wäßrige Dispersion bzw. Emulsion nach einem der Ansprüche 1-7.